# EUROPEAN PATENT APPLICATION

(11) **EP 2 587 577 A1**
(43) Date of publication of application: **01.05.2013**
(21) Application number: 11798110.0
(22) Date of filing: 21.06.2011
(51) Int. Cl.: H01M 8/04, H01M 8/10

(54) **FUEL CELL SYSTEM**

(30) Priority: 23.06.2010 JP 2010142242
(71) Applicant: Nissan Motor Co., Ltd, Yokohama-shi, Kanagawa 221-0023 (JP)
(72) Inventor: OSADA, Takahito, Atsugi-shi,Kanagawa 243-0123 (JP); IKEZOE, Keigo, Atsugi-shi,Kanagawa 243-0123 (JP); CHIKUGO, Hayato, Atsugi-shi,Kanagawa 243-0123 (JP)
(74) Representative: Hager, Thomas Johannes
(86) International application number: PCT/JP2011/064101
(87) International publication number: WO 2011/162226

(57) **Abstract**

The conventional fuel cell systems have a problem that the structure of the system cannot be made compact because a piping system for a cathode gas is provided with an off-gas bypass line branched from an off-gas line. A fuel cell system is provided with a fuel cell (1), a gas supply passage (2) which supplies a reaction gas to the fuel cell (1), a humidifier (3) which humidifies the reaction gas, a first gas discharge passage (4A) which leads from a first gas discharge outlet (1A) of the fuel cell (1) through the humidifier (3) to the outside, and a second gas discharge flow passage (4B) which leads from a second gas discharge outlet (1 B) of the fuel cell (1) to the outside. A flow rate control mechanism (5) which controls the flow rate of discharge gas is provided in at lease one of the first gas discharge passage (4A) and the second gas discharge passage (4B). The configuration reduces the distance between the fuel cell (1) and the humidifier (3) to obtain a compact system structure.

## Description

### TECHNICAL FIELD

The present invention relates to a fuel cell system including a fuel cell which generates electricity by an electrochemical reaction of reaction gas. In particular, the present invention specifically relates to an improved fuel cell system equipped with a humidifier for humidifying the reaction gas.

### BACKGROUND ART

As described in Patent Document 1, for example, a conventional fuel cell system is provided with a fuel cell that generates electricity by an electrochemical reaction of the reaction ga, a humidifier that humidifies a cathode gas supplied to the fuel cell, an off-gass line for discharging the cathode off-gas discharged from the fuel cell to the outside, and an off-gas bypass line.

The off-gas line runs through the humidifier, and after supplying water content included in the off-gas to the humidifier, leads to the outside. The off-gas bypass line is branched from the off-gas line and leads to the outside without going through the humidifier. Thus, in order to properly adjust the water content of the cathode off-gas that is supplied to the humidifier, a portion of the cathode off-gas is bypassed..

### PRIOR ART LITERATURE

### PATENT LITERATURE

Patent Literature 1: JP Publication of Unexamined Patent Application No. 2007-220497:

### SUMMARY OF THE INVENTION

### PROBLEM THAT THE INVENTION IS TO SOLVE

Incidentally, In the fuel cell system of this kind, as reactant gases, an anode gas (i.e., hydrogen) and a cathode gas (i.e., air) are used. Since oxygen concentration in the air is approximately 16%, the diameter of the cathode gas piping system has to be set larger compared to the anode gas piping system in order to secure the substance amount of oxygen.

However, in the conventional fuel cell system described above, in a piping system of the cathode gas, especially the piping system for cathode off-gas is configured to include an off-gas line and an off-gas bypass line branched from this off-gas line. Therefore, a problem occurs that there is a branch pipe of large diameter present between the fuel cell and the humidifier, and thus it is difficult to obtain a compact system structure. The solution of this problem has been a longstanding issue to solve the problem.

The present invention has been made by focusing on the problems of the prior art described above, and in particular, has the objective to provide a fuel cell system with a humidifier to humidify a reactant gas while realizing a compact system structure.

### MECHANISM TO SOLVE THE PROBLEM

A fuel cell system according to the present invention comprises a fuel cell that generates electricity by an electrochemical reaction of reaction gas, a gas supply path or passage for supplying the reaction gas to the fuel cell, and a humidifier for humidifying the reaction gas flowing in the gas supply passage. As outlet of reaction gas, the fuel cell is provided with a first gas outlet port and a second gas outlet port respectively, which are independent from each other.

In addition, the fuel cell system is provided with a first gas discharge channel or structure leading from the first gas outlet port of fuel cell through the humidifier up to the outside, and a second gas discharge channel or passage leading from a separate, second gas discharge port to the outside. Moreover, a flow rate control mechanism to control the flow rate of the discharge gas is disposed in at least one of the first gas discharge passage and the second gas discharge passage. With these configurations, the conventional problem is intended to be solved.

### EFFECT OF THE INVENTION

Due to the fuel cell system according to the present invention, in the fuel cell system equipped with a humidifier for humidifying the reaction gas, in particular, the distance between the humidifier and the fuel cell may be reduced while realizing the compact system structure.

### BRIEF DESCRIPTION OF THE DRAWINGS

[Figure 1] Fig. 1 is a block diagram illustrating one embodiment of a fuel cell system according to the present invention.
[Figure 2] Fig. 2 is a partially cutaway plan view for explaining a unit cell.
[Figure 3]. Fig. 3 is a plan view for explaining the flow of the reaction gas of the fuel cell
[Figure 4] Fig. 4 is a perspective view illustrating the fuel cell.
[Figure 5] Fig. 5 is another perspective view of the fuel cell shown in Figure 4 as viewed from the back side thereof.
[Figure 6] Fig. 6 is a block diagram illustrating another embodiment of the fuel cell system according to the present invention.
[Figure 7] Fig. 7 is a block diagram showing still another embodiment of the fuel cell system according to the present invention.
[Figure 8] Fig. 8 is a block diagram showing yet still another embodiment of the fuel cell system according to the present invention.
[Figure 9] Fig. 9 is a block diagram showing yet still another embodiment of the fuel cell system according to the present invention.

### EMBODIMENTS FOR CARRYING OUT THE INVENTION

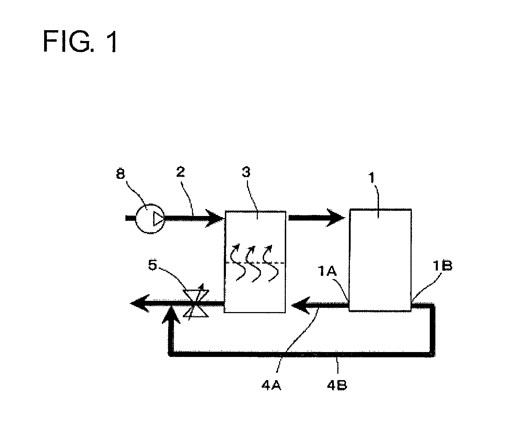

In the following, description is made of an embodiment of the fuel cell system according to the present invention with reference to the drawings,.
A fuel cell system shown in Figure 1 has a fuel cell 1 that generates electricity by an electrochemical reaction of the reaction gas, a gas supply passage 2 for supplying reaction gas to fuel cell 1, and a humidifier 3 to humidify the reaction gas flowing in gas supply passage 2.

In addition, the fuel cell system is provided with both a first gas discharge channel 4A leading from the first gas outlet port 1A of fuel cell 1 through the humidifier 2 to the outside, and a second gas discharge channel 4B leading from a separate, second gas outlet 1B to the outside. Moreover, a flow rate control mechanism 5 to control the flow rate of the discharge gas (off-gas) is disposed in at least one flow passage of the first gas discharge passage 4A and the second gas discharge passage 4B

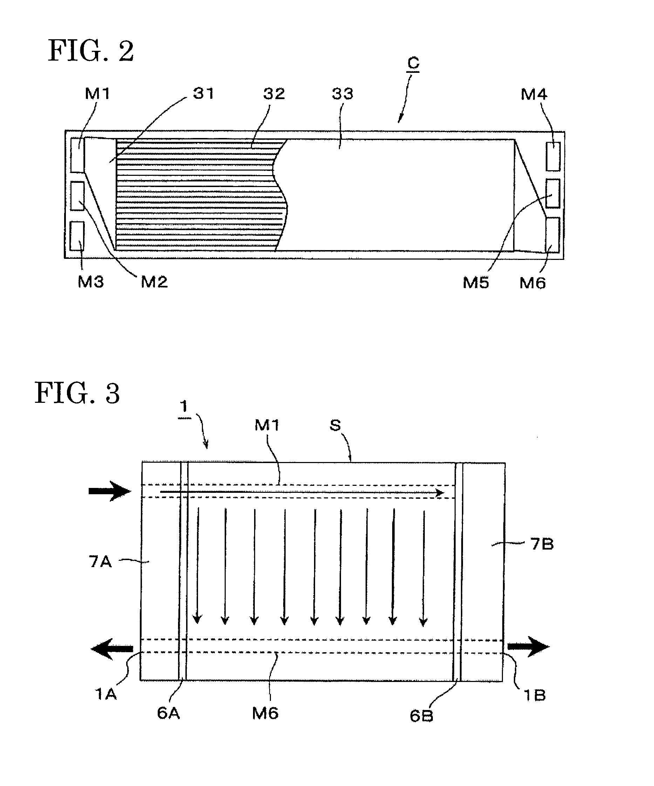

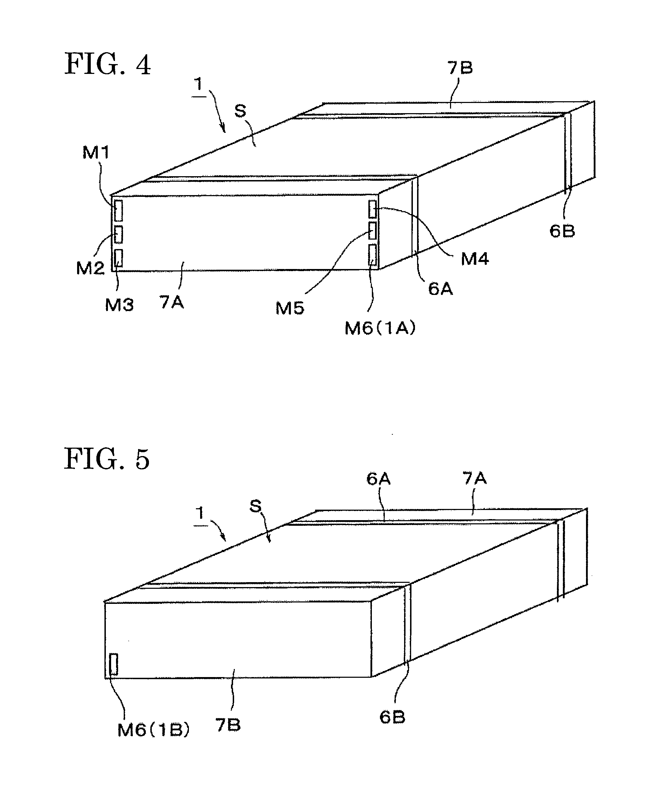

The fuel cell 1 is configured to constitute a fuel cell stack S shown in Fig. 3 by laminating or stacking a plurality of unit cell C shown in Fig. 2. As shown in Figs. 4, 5, end plates 7A, 7B are fixed on both sides of fuel cell stack S in the stacking direction with current collector 6A, 6B interposed, respectively.

The unit cell C forms a rectangular shape in the example shown in Figure 2, having a membrane electrode assembly 32 integrated with frame 31 made of resin around its periphery. Also provided are metal separators 33 sandwiching flame 31 and membrane electrode assembly 32.

The unit cell C allows for anode gas (hydrogen) as reaction gas to circulate between a fuel electrode (anode) and the separator 33. Also, between an air electrode (cathode) and separator 33, cathode gas (air) as another reaction gas will be circulated. Moreover, a plurality of unit cells C will be stacked to constitute a fuel cell stack S thereby allowing coolant fluid to flow or circulate between adjacent separators 33, 33.

In the unit cell C shown, on the one of two short sides, an inlet manifold of cathode gas (air) M1, an inlet manifold of the cooling fluid M2, and an outlet manifold of anode gas(hydrogen) M3 are formed respectively. On the other short side, an inlet manifold of anode gas M4, an outlet manifold of cooling fluid M5, and outlet manifold of cathode gas M6 are formed respectively. Therefore, fuel cell 1 introduces from outside reaction gas and cooling liquid in the stacking direction of unit cells C. Reaction gas and cooling fluid are respectively allowed to flow in a direction along the long side.

It should be noted here that, as shown especially in Figure 3 illustrating the flow of the cathode gas, cathode gas is introduced on the side of one end plate 7A, and supplied through inlet manifold M1 to each unit cell C. The inlet manifold M1 is blocked on the side of the other end plate 7B. Then, the fuel cell 1, which puts out to the outside an off-gas or exhaust gas of the cathode gas, the outlet manifold M6 of cathode gas have reached end plates on both sides 7A, 7B, and as also shown in Figures 4 and 5 , to form a first and second gas outlet 1 A and 1B, that are separated, respectively.

In other words, the fuel cell system shown in Fig. 1 is provided with the fuel cell 1 comprising a fuel cell stack S, a gas supply passage 2 for supplying to fuel cell 1 cathode gas (air) as reaction gas, and a humidifier 3 disposed in the gas supply passage 2 for humidifying cathode gas flowing in the gas supply passage.2. Gas supply passage 2 supplies cathode gas to fuel cell 1 , as shown in Figure 3, from one end of stacking direction (left-hand side in the figure) of fuel cell stack S. The gas supply channel 2 is provided with a compressor 8 to supply cathode gas under pressure.

Further, the fuel cell system is provided with, as cathode gas discharge passage, a first gas discharge passage 4A as well as a second gas discharge passage 4B, and the first gas discharge passage 4A is provided with a flow rate control mechanism 5 to control a flow rate of exhaust gas (cathode off-gas after reaction). In this instance, as shown in FIG. 3, the first gas discharge passage 4A for the fuel cell 1 goes from a first gas outlet 1 A provided on an end of stacking direction of fuel cell stack S (supply side of cathode gas) through humidifier 3 to the outside. The second gas discharge passage 4B goes from the second gas outlet 1 B of the other end of stacking direction of fuel cell stack S, with respect to the fuel cell 1, and leads to outside, equally shown in Fig 3.

More specifically, the first gas discharge passage 4A exits from first gas outlet 1A provided on fuel cell 1 and passes through humidifier 3 to provide to humidifier 3 water content (steam) contained in discharge gas and leads to outside via flow rate control mechanism 5. The second gas discharge passage 4B is connected between the second gas outlet 1B of fuel cell 1 and the gas discharge passage at the location downstream of flow rate control mechanism 5 for exiting to the outside.

The flow rate control mechanism of this embodiment can be a flow rate control valve 5 in which the flow rate is regulated steplessly or continuously between the fully opened and fully closed position. It should be noted that, as shown above, the flow rate control valve 5 is disposed in first gas discharge passage 4A only, and the one passage provided with flow rate control valve 5 is lower in pressure loss than the second gas discharge passage 4B. Therefore, the pressure loss of second gas discharge passage 4B is greater. Thus, in the fuel cell system, with the flow rate control valve 5 fully open, the flow quantity per unit time in the first gas discharge passage 4A is greater, while the flow quantity per unit time of second gas discharge passage 4B is smaller.

Note that, although in Figure 1, only communication channels or passages for cathode gas are shown, the fuel cell system is obviously provided with those flow passages for anode gas and cooling liquid respectively.

In the fuel cell system comprised of the configurations above, anode gas and cathode gas are each introduced into fuel cell 1 with the cathode gas humidified by humidifier 3, and fuel cell 1 generates electricity due to electrochemical reaction. In addition, in the fuel cell system, the discharge gas of fuel cell 1 flow in the first and second gas discharge passages 4A, 4B, respectively, and the water content contained in the discharge gas is supplied to humidifier 3 and then discharged to outside.

At this time, by adjusting the opening degree of the flow rate control valve 5 , the fuel cell system can control the flow rate of discharge gas passing through humidifier 3 thereby adjusting the amount of humidification of cathode gas introduced in fuel cell 1. For example, at a high humidity of atmosphere, the flow of the discharge gas passing through humidifier 3 will be reduced or even set to zero so that the amount of humidification of the cathode gas will be decreased.

Further, in the fuel cell system, the pressure loss of the first gas discharge passage 4A provided with flow rate control valve 5 is lower than the pressure loss of second gas discharge passage 4B. When only the opening of the flow rate control valve 5 is adjusted, the amount of humidification of cathode gas may be changed by changing the flow rate of discharge gas passing through humidifier 3. Stated differently, even at a fully open or fully closed state of flow rate control valve 5, the ratio in pressure loss between the first and second gas discharge passages 4A, 4B may be designed so that desired flow rates are assured in each of first and second gas discharge passages 4A, 4B.

In the above described fuel cell system, in addition to provisions of electricity generation function and a function of humidification amount adjustment for cathode gas, a simplified structure without any branch piping or valve, etc. between fuel cell 1 and humidifier 3 is obtained so that the distance between fuel cell 1 and humidifier 3 may be reduced with miniaturization or compactness of the overall system structure.

Further, the fuel cell system described above may be mounted on a vehicle such as an automobile, for example,. In this case, it is necessary to use a large-diameter piping systems of the cathode gas, as mentioned above. More specifically, a pipe of more than 50mm aperture or diameter is used. Therefore, in a system in which a branch pipe or the like exists between the fuel cell 1 and the humidifier 3, it is necessary to provide a sufficient space well exceeding the diameter of the piping between both components. In contrast, in the present fuel cell system, the space between fuel cell 1 and humidifier 3 may be made shorter so that the system is very suitable for vehicle in which mounting space is limited.

Note that, in the above fuel cell system where reaction gas is cathode gas, a more preferred embodiment may be configured such that the distance between fuel cell stack (fuel cell 1) S and humidifier 3 is made smaller than a diameter of the first gas discharge passage 4A.

Thus, in addition to realizing the miniaturization of the system structure, contribution to improve in performance of humidifier 3 may be achieved as well. That is, in the humidifier 3, a water exchange (humidification) is carried out through a hollow fiber membrane, for example, and this moisture exchange is performed by a steam in the discharge gas (cathode off-gas), what would not take place by a condensed water. Thus, as described above, when the distance between fuel cell stack S and humidifier 3 is small, the temperature reduction of discharge gas entering humidifier 3 from fuel cell stack S may be suppressed so that the amount of water introduced into humidifier 3 is sufficiently secured (i.e. by reducing the amount of condensed steam) with improved water exchange rate.

Moreover, in the fuel cell system described above, since the first and second discharge gas outlet 1A, 1B are respectively disposed at two positions located on the one and the other end with respect to the stacking direction of fuel cell stack, depending on which of the two outlets 1A, 1B is used for exiting the discharge gas, a variation of the cathode gas distribution within fuel cell stack S would change. Fore example, when discharge gas is discharged from one side (on the side of humidifier 3), i.e. from first outlet 1A through discharge passage 4A, more cathode gas is flown to unit cells C that are positioned nearer to humidifier 3, whereas no flow to the other side. In this case, the small flow velocity of discharge gas on the other side will make it difficult for water to be discharged. In contrast, in the present fuel cell system, by switching the discharge passages 4A, 4B, water may be discharged appropriately.

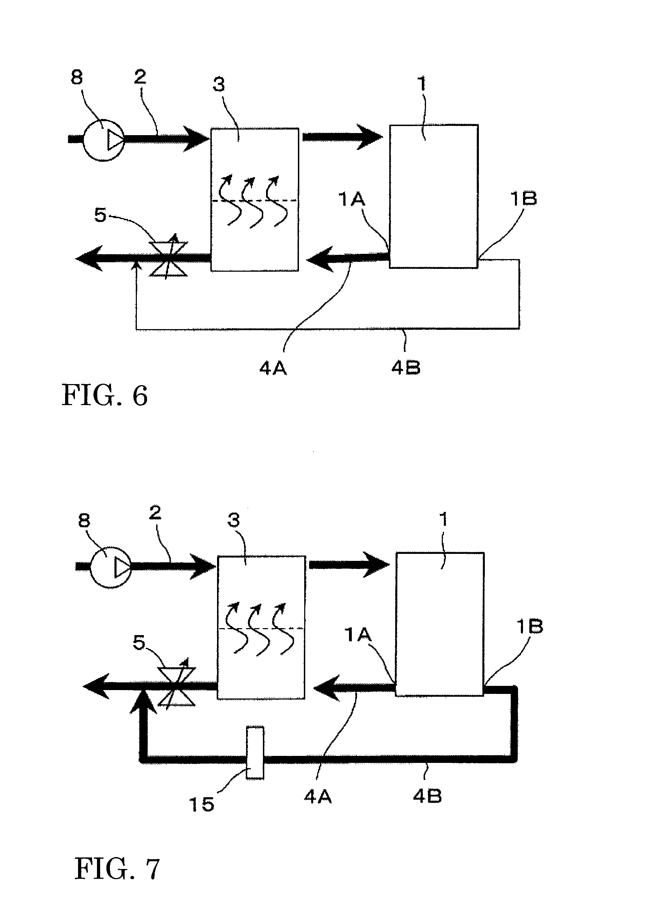

Figures 6-9 represent other four embodiments of the fuel cell system according to the present invention. It should be noted that parts of the same configuration as the previous embodiment, a detailed description thereof will be omitted by attaching the same reference numerals.

In the fuel cell system shown in Fig. 6, a flow rate control mechanism 5 is disposed in either a first gas discharge passage 4A or second gas discharge passage 4B. The diameter of flow passage in which the flow rate control mechanism 5 is disposed is larger than the diameter of flow passage of the other.

More specifically, in the fuel cell system shown, in a passage, i.e., in a first gas discharge passage 4A is provided with a flow rate control mechanism 5, and the diameter of a passage, i.e., the first gas discharge passage 4A is set larger than the diameter of the other passage, i.e., the second gas discharge passage 4B (other passage) Thus, in this fuel cell system, a pressure loss of first gas discharge passage 4A is lower than the pressure loss of the second gas discharge passage 4B.

The fuel cell system shown in Figure 7 has flow rate control mechanisms 5, 15 disposed in both the first gas discharge passage 4A and the second gas discharge passage 4B. The flow rate control mechanism provided in a first passage, i.e., first gas discharge passage 4A, is a flow rate control valve 5 while the flow rate control mechanism 15 disposed in the second gas discharge passage 4B is in the form of orifice. Therefore, in this fuel cell system, the pressure loss of the first gas discharge passage 4A is lower than the pressure loss of the second gas discharge passage 4B.

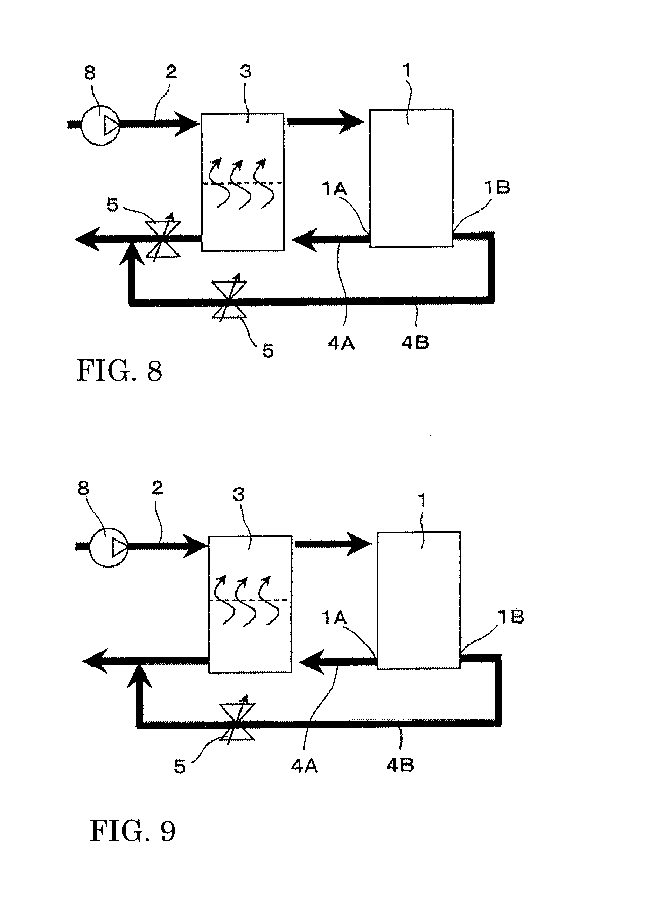

In the fuel cell system shown in Fig. 8, flow rate control mechanisms 5, 5 are located in both the first gas discharge passage 4A and the second gas discharge passage 4B, and both flow rate control mechanisms 5, 5 are configured as flow rate control valves.

In the respective fuel cell systems shown in the above Figs. 6 to 8, similarly to the previous embodiment, by adjusting the opening degree of the flow rate control valve 5, the flow rate of discharge gas passing through humidifier 3 may be adjusted to control the humidification amount of the cathode gas. Moreover, in each fuel cell system, similarly to the previous embodiment, the distance between fuel cell 1 and humidifier 3 may be shortend to realize the overall size of system configuration.

In particular, in the fuel cell system shown in Figure 6, use of a small diameter pipe for the second gas discharge passage 4B may further contribute to miniaturization of the system structure. In addition, the fuel cell system shown in Fig. 7 may be configure to set a desired ratio in pressure loss by using a common piping for the first and second gas discharge passages 4A, 4B and selecting the diameter of orifice 15 appropriately. In addition, the fuel cell system shown in Fig. 8 assures a even more accurate control of flow rate because of employment of flow rate control valves 5 in both the first and second gas discharge passages 4A, 4B.

In each embodiment shown In Figs. 1 to 8, such a configuration has been proposed in which flow rate control mechanism is provided in the first gas discharge passage 4A only, or flow rate control mechanisms are provided in both the first and second gas discharge passages 4A, 4B. By comparison, in the fuel cell system shown in Fig. 9, flow rate control valve 5 is disposed in the second gas discharge passage 4B as a flow rate control mechanism.

, In this latter case, in the fuel cell system, contrary to the configurations in the previous embodiments, the pressure loss in the first gas discharge passage 4A may be set lager than the pressure loss of the second gas discharge passage 4B. For example, the diameter of the first gas discharge passage 4A may be reduced, or an orifice 15 can be disposed in the first gas discharge passage 4A.

Even in the fuel cell system above, by opening adjustment of flow rate control valve 5, the flow rate of discharge gas passing through humidifier 3 may be adjusted and, similarly in the previous embodiments, by reducing the space between fuel cell 1 and humidifier 3, a compact system structure may be realized.

Note that the fuel cell system is not confined to respective embodiments descried above, but an appropriate change in details of configurations may be available without departing from the scope of the present invention. Further, in the above embodiments, such a case has been explained in which humidifier 3, first and second gas discharge passages 4A, 4B as well as flow rate control mechanism, etc. are disposed in a flow passage of cathode gas as reaction gas. These components or configurations may be disposed in a communication passage of anode gas as reaction gas. However, as explained above, it is necessary to have a larger diameter piping system of the cathode gas compared to that of piping system of the anode gas. Therefore, provision of these components in the communication passage of cathode gas is more preferable to achieve the miniaturization of system structure.

### DESCRIPTION OF REFERECE NUMERALS

- 1: Fuel cell
- 1A: First gas outlet
- 1B: Second gas outlet
- 2: Gas supply path or passage
- 3: Humidifier
- 4A: First gas discharge passage
- 4B: Second gas discharge passage
- 5: Flow rate control valve (flow rate control mechanism)
- 15: Orifice (flow rate control mechanism)
- C: Unit cell
- S: Fuel cell stack

## Claims

**1.** A fuel cell system, comprising:
a fuel cell that generates electricity by electrochemical reaction of reaction gas;
a gas supply passage for supplying reaction gas to the fuel cell;
a humidifier fro humidifying the reaction gas circulating the gas supply passage;
a first gas discharge passage leading from a first gas outlet of the fuel cell through the humidifier to the outside;
a second gas discharge passage leading from a second gas outlet of the fuel cell to the outside: and
a flow rate control mechanism for controlling the flow rate of discharge gas disposed in at least one of the first gas discharge passage and the second gas discharge passage.

**2.** A fuel cell system, comprising:
a fuel cell stack comprised by stacking a plurality of unit cells that generates electricity by electrochemical reaction of reaction gas;
a gas supply passage fro supplying reaction gas from an end of the stacking direction of the fuel cell stack;
a humidifier disposed in the gas supply passage for humidifying reaction gas passing through the gas supply passage;
a first gas discharge passage leading from an end of the stacking direction of the fuel cell stack through the humidifier to the outside;
a second gas discharge passage leading from the other end of stacking direction of the fuel cell stack; and
a flow rate control mechanism for controlling the flow rate of discharge gas disposed in at least one of the first gas discharge passage and the second gas discharge passage.

**3.** The fuel cell system as claimed in claim 2, wherein
the reaction gas is cathode gas, and
the distance between the fuel cell stack and the humidifier is shorter that the diameter of the first gas discharge passage.

**4.** The fuel cell system as claimed in any one of claims 1 to 3, wherein
the flow rate control mechanism is provided in either the first gas discharge passage or second gas discharge passage; and
the pressure loss of a passage in which the flow rate control mechanism is provided is lower than the pressure los of the other passage.

**5.** The fuel cell system as claimed in claim 4, wherein
the flow rate control mechanism is provided in either the first gas discharge passage or second gas discharge passage; and
the diameter of a passage in which the flow rate control mechanism is provided is larger than the diameter the other passage.

**6.** The fuel cell system as claimed in claim 4, wherein
the flow rate control mechanism is provided in both the first gas discharge passage and second gas discharge passage; and
the flow rate control mechanism provided in the one passage is a flow rate control valve, and the flow rate control mechanism provided in the other passage is an orifice.

**6.** The fuel cell system as claimed in claim 4, wherein
the flow rate control mechanism is provided in both the first gas discharge passage and second gas discharge passage; and
the flow rate control mechanism provided in the one passage is a flow rate control valve, and the flow rate control mechanism provided in the other passage is an orifice.

**7.** The fuel cell system as claimed in any one of claims 1 to 3, wherein
the flow rate control mechanism is provided in both the first gas discharge passage and second gas discharge passage; and
each flow rate control mechanism is a flow rate control valve.
